# EUROPEAN PATENT SPECIFICATION

(11) **EP 3 220 707 B1**
(45) Date of publication and mention of the grant of the patent: **25.12.2019**
(21) Application number: 16290047.6
(22) Date of filing: 14.03.2016
(51) Int. Cl.: H04W 72/14, H04W 74/08

(54) **FIRST RADIO COMMUNICATIONS DEVICE AND METHOD TO OPERATE THE FIRST RADIO COMMUNICATIONS DEVICE**
ERSTE FUNKKOMMUNIKATIONSVORRICHTUNG UND VERFAHREN ZUM BETRIEB DER ERSTEN FUNKKOMMUNIKATIONSVORRICHTUNG
PREMIER DISPOSITIF DE COMMUNICATION RADIO ET PROCÉDÉ POUR LE FAIRE FONCTIONNER

(43) Date of publication of application: 20.09.2017
(73) Proprietor: Alcatel Lucent, 91620 Nozay (FR)
(72) Inventor: SCHREIBER, Gerhard, 70435 Stuttgart (DE); SAUR, Stephan, 70435 Stuttgart (DE); KLEIN, Siegfried, 70435 Stuttgart (DE)
(74) Representative: DREISS Patentanwälte PartG mbB

(56) References cited:
- EP-A2- 2 613 603
- WO-A1-2012/082053
- US-A1- 2013 242 730

## Description

### Field of the invention

The present invention relates to a first radio communications device for a radio communications network and to a method to operate such first radio communications device.

The invention further relates to a second radio communications device of a radio communications network and to a method to operate such second radio communications device.

### Background

The upcoming "Internet of Things" increases the so called machine-type communication with an associated traffic volume. Moreover, with increasing numbers of active mobile users in a cell, scalability of the radio access system of LTE is limited. One important characteristic is that a big number of machine devices transmit sporadically small payload messages, i.e. small individual user throughput, but overall significant network load. The radio access schemes of existing technologies like LTE are primarily designed for the support of high data rates and high mobility. In consequence the radio access of machine devices becomes rather inefficient regarding required signalling overhead.

A generic characteristic of a random access attempt is at first that the identity of the device is unknown in the network during the assignment of radio resources until it is transmitted e.g. as part of a small packet.

EP 2 613 603 A2 discloses a plurality of methods and apparatus for random access and multicarrier wireless communications.

### Summary

In view of this, it is an object of the present invention to provide an improved first radio communications device, improved second radio communications device and method of operating such first radio communications device, and such a second radio communications device which ensures at least for a fraction of the first radio communications device a success in sending payload data and furthermore to reduce signalling overhead.

Especially the case of delivering small fractions of payload to the second radio communications device by a huge number of first radio communications devices with stringent delay requirements (e.g. smart metering, environmental monitoring) and link latency requirement (e.g. process control in a factory hall, autonomous driving) is addressed. The proposed mechanism prefers first radio communications device with stringent delay requirements, without necessarily sacrificing the performance of all other first radio communications devices. So, the overall performance in terms of low packet loss rate and low latency of the proposed first radio communications device compared with radio communications devices operating in a low priority access mode is ameliorated.

So, sporadic and autonomous small packet transmissions especially in an uplink with a big number of first radio communications devices per second radio communications device is far better, as closed-loop link adaptation schemes fail in this context.

Advantageously the second radio communications device does not need to know that a plurality of preambles is transmitted from only one first radio communications device.

Regarding the abovementioned first radio communications device, according to a first aspect, said object is achieved by the first radio communications device, especially a terminal, being configured to: determine a high priority access mode to perform a prioritized transmission of payload to a second radio communications device, especially a base station; perform a high priority access attempt to the second radio communications device while the first radio communications device is operating in the high priority access mode, wherein performing the high priority access attempt comprises: determining a set of different preambles associated with one or more secondary radio resources rr2, and transmitting to the second radio communications device the set of different preambles simultaneously via one or more primary radio resources, especially one or more primary uplink radio resources; and transmit the payload to the second radio communications device via one or more secondary radio resources, especially one or more secondary uplink radio resources.

According to an advantageous embodiment the first radio communications device is being configured to: transmit the payload and an identifier of the first radio communications device and/or of a service of the first radio communications device to the second radio communications device via the one or more secondary radio resources.According to an advantageous embodiment the set of preambles comprises a first number of preambles, and the first radio communications device is being configured to: receive a second number of access grants in response to the transmission of the set of preambles from the second radio communications device, wherein the second number is equal to or less than the first number; determine a third number of granted secondary radio resources for the transmission of the payload to the second radio communications device; and transmit the payload to the second radio communications device via the third number of granted secondary radio resources.

According to an advantageous embodiment the third number equals the second number and therefore payload is being transmitted by means of all granted secondary radio resources, which provides an enormous reduction of packet loss probability.

According to an advantageous embodiment the first radio communications device is being configured to: determine the set of preambles to be associated with a set of disjoint secondary radio resources.

Using disjoint secondary radio resources reduces packet loss probability as providing resource diversity.

According to an advantageous embodiment the first radio communications device is configured to: determine the set of preambles to be associated with a single secondary radio resource.

Especially in a case, when the first radio communications device has knowledge of a channel quality regarding the single secondary radio resource it can request the single secondary radio resource by selecting the respective preambles being associated with the single secondary resource. Furthermore, energy consumption of the first radio communications device is reduced due to the use of a single radio resource only.

According to an advantageous embodiment the first radio communications device is configured to: comprise a priority class indicating a permanent high priority mode for the first radio communications device and/or for a service running on the first radio communications device; receive a load indicator from the second radio communications device; and disable the high priority access mode in dependence on the load indicator and in dependence on the priority class. The load indicator allows a control of the fraction of first radio communications devices operating in the high priority mode. Therefore, the preamble collision probability can be reduced to a certain expected level. If the fraction of first radio communications devices operating in high priority access mode is small enough, say 1%, they experience a significant gain with regard to packet loss rate, while the performance degradation of the remaining first radio communications devices not operating in high priority access mode and therefore transmitting just one single preamble is negligible.

According to an advantageous embodiment the first radio communications device is configured to perform a plurality of access attempts being spaced by a respective period in time, wherein at least one of the plurality of access attempts is the high priority access attempt.

This also allows a control of the fraction of first radio communications devices operating in the high priority mode. Therefore, the preamble collision probability can be reduced, while the transmission success probability of the payload from the first to the second radio communication device is increased.

According to an advantageous embodiment the first radio communications device is configured to: transmit payload data via a plurality of secondary radio resources, wherein at least one reference referring to a first one of the plurality of secondary radio resources is transmitted via a second one of the plurality of secondary radio resources.

The use of references allows transmitting the ID only via a single secondary radio resource and therefore provides to free up valuable secondary radio resources for payload.

According to an advantageous embodiment the plurality of secondary radio resources is doubly linked by means of respective references.

The doubly linking ameliorates the decoding probability at the second radio communications device as a not decodable part does not completely break up the linked list of secondary radio resources as the rest of the secondary radio resources is reachable via a reverse direction of the linked secondary radio resources.

Regarding the abovementioned secondary radio communications device, according to a second aspect, said object is achieved by a second radio communications device, especially a base station, for a radio communications network, the second radio communications device being configured to: determine a high priority access attempt from a first radio communications device, especially a terminal, wherein the determining of the high priority access attempt comprises: receiving a set of different preambles simultaneously from the first radio communications device via one or more primary radio resources, especially one or more primary uplink radio resources, and detecting the set of different preambles; receiving payload and an identifier of the first radio communications device and/or of a service of the first radio communications device from the first radio communications device via one or more secondary radio resources, especially one or more secondary uplink radio resources, being associated with the set of different preambles; detecting a high priority access attempt if the received payload and the identifier are received via the one or more secondary radio resources, wherein the set of different preambles is associated with the one or more secondary radio resources. Identifying a high priority access attempt allows to reduce ACK/NAK control messaging overhead by only sending a single ACK/NAK message for a plurality of received data via the plurality of secondary radio resources. Furthermore, the detection of the high priority access attempt allows to combine data sent via the plurality of secondary radio resources.

The invention is set-out in the appended claims.

### Brief description of the figures

Figures 1, 5, 6, 7 and 10
   show a schematic flow chart, respectively;
Figure 2
   shows schematically a cell of an exemplary radio communications network;
Figure 3
   shows a schematic fixed association scheme;
Figure 4
   shows a schematic variable association scheme;
Figure 8
   shows a schematic structure of a data packet; and
Figure 9
   shows a schematic uplink radio resource diagram.

### Description of the embodiments

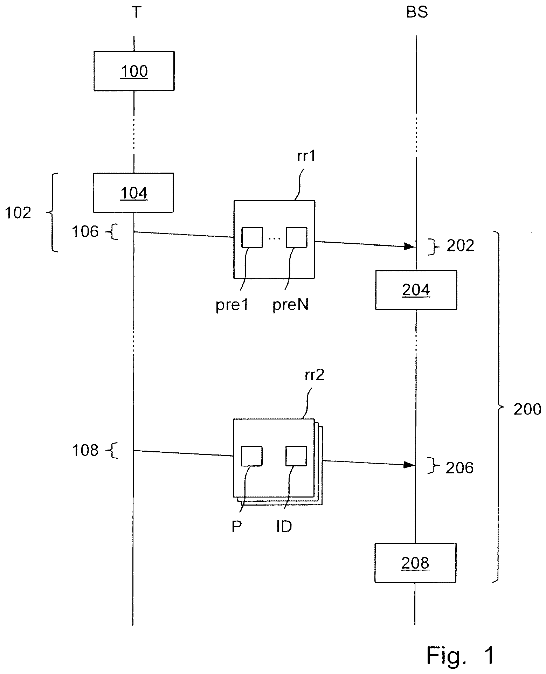

Figure 1 shows a schematic flow chart. A first radio communications device T, especially a terminal, for a radio communications network determines in a step 100 a high priority access mode to perform a prioritized transmission of payload P to a second radio communications device BS, especially a base station. The first radio communications network device T can be also referred to as a user equipment, UE. The first radio communications device T performs in a step 102 a high priority access attempt to the second radio communications device BS when the first radio communications device T is operating in the high priority access mode. A low priority access attempt in a low priority access mode on the other hand comprises a transmission of a single preamble at a single point in time from the first radio communications device T to the second radio communications device BS.

Throughout the description the first radio communications device T may refer to a terminal and the second radio communications BS device may refer to a base station, therfore refering to an uplink transmission case of payload. However, the desribed communication schemes may be also applied to a peer-to-peer case, where the first and second radio communications devices are of the same hierarchy level, and may also be applied to a downlink case, where the second radio access device randomly accesses the first radio access device.

In an embodiment the high priority access mode is persistent, wherein the step 100 is determined once at initialization of the first radio communications device T. The persistent high priority mode may be applied for specific application domains, for example environment measurements (atmospheric pressure, iced roads), infrastructure (persons waiting at bus stop, fill level of garbage cans), healthcare (emergency signal for its people), security (Fire alert), etc. Consequently the classification of the first radio communications device T or respective service is done once per use case or application domain.

In another embodiment the step 100 is triggered by an event, like a low battery indication of the first radio communications device T, a last transmission attempt or the like.

The step 102 of performing the high priority access attempt comprises that the first radio communications device T determines in a step 104 a set of a first number N of different preambles pre1 to preN according to a preamble determination scheme. Therefore the set comprises the first number N of preambles pre1 to preN, wherein the first number N is greater than 1. Consequently, the set of preambles pre1 to preN comprises the first number N of two or more preambles pre1 to preN. The step 102 further comprises a step 106, in which the first radio communications device T transmits simultaneously the set of N preambles pre1 to preN to the second radio communications device BS via one or more primary radio resources rr1, especially one or more primary uplink radio resource. When referring to uplink radio resource or a radio resource in general it is referred to a location/region in time and/or frequency and/or code which is selected for a transmission and/or reception of data.

The first radio communications network device T is not necessarily uplink synchronized to the radio communications network with respect to the allocation of the at least one primary uplink radio resource for transmitting preambles pre1 to preN.

According to an embodiment the preamble determination scheme in step 104 comprises to determine the set of preambles pre1 to preN to be associated with a set of disjoint secondary radio resources rr2. This embodiment is preferably used when applying a fixed association scheme between preambles pre1 to preN and secondary radio resources rr2 as described herein.

According to an embodiment the preamble determination scheme in step 104 comprises to determine the set of preambles pre1 to preN to be associated with a single secondary radio resource rr2. This determination can be made for example if a quality of an uplink channel associated with the single secondary uplink resource rr2 is available at the first radio communications device T. Therefore, this knowledge of the uplink channel quality can be exploited by determining the number N of preambles pre1 to preN being associated with the respective single secondary radio resource rr2 desired. This embodiment can be used in a one-stage communication scheme and a two-stage communication scheme, both described herein. This embodiment is exclusively used when applying a fixed association scheme between preambles pre1 to preN and secondary radio resources rr2.

According to an embodiment the preamble determination scheme in step 104 comprises to determine the set of preambles pre1 to preN randomly. This embodiment can be applied with the fixed association scheme and a variable association scheme described herein.

According to an embodiment the preambles pre1 to preN are determined from the same base sequence, i.e. a Zadoff-Chu sequence or a m-sequence, by cyclic shifting. According to a further embodiment of the preambles pre1 to preN are determined from a set of base sequences, i.e. a Zadoff-Chu sequence or a m-sequence,, wherein the set of base sequences have essentially equal or at least comparable correlation properties to ensure proper reception and processing by the second radio communications device BS.

According to an embodiment the preambles pre1 to preN are determined to refer to respective secondary radio resources which have in mean a big distance from each other in frequency domain to maximise frequency diversity. This helps to mitigate the effect of insufficient channel knowledge for sporadic, infrequent data transmissions. For example a number of nine secondary radio resources rr2 are available, each first radio communications device may select the set of preambles pre1 to preN referring to a first group of allocations 1, 4, and 7, a second group of allocations 2, 5, and 8, or to a third group of allocations 3, 6, and 9 of the secondary radio resources rr2. Furthermore, preambles can be selected which refer to secondary radio resources rr2 with a maximum available distance in time, frequency or a code. Therefore a diversity gain is achieved by preventing proximity between the secondary radio resources rr2.

The simultaneous transmission of the preambles pre1 to preN comprises at least an overlap in time by at least two of the preambles pre1 to preN. Therefore the simultaneous transmission comprises that the first radio communications device T transmits the preambles pre1 to preN in the same transmission time interval, TTI. Therefore, the set of preambles pre1 to preN is code multiplexed in a time-frequency region, for example in a LTE Physical Random Access Channel, PRACH, via one transmission time interval, TTI, in time and six resource blocks in frequency direction. Preferably, the simultaneous transmission of the preambles pre1 to preN is performed via the same primary radio resource rr1.

Furthermore, the first radio communications device T transmits in a step 108 the payload P and an identifier ID of the first radio communications device T and/or of a service of the first radio communications device T to the second radio communications device BS via at least one secondary radio resource rr2, especially at least one secondary uplink radio resource, being associated with the set of different preambles pre1 to preN.

In an embodiment the step 108 comprises the transmission of the payload P but does not comprise the transmission of the identifier ID.

The second radio communications device BS for the radio communications network determines in a step 200 a high priority access attempt from the first radio communications device T. The step 200 comprises a step 202, in which the second radio communications device BS receives a set of N different preambles pre1 to preN simultaneously from the first radio communications device T via the primary radio resource rr1.

The step 200 further comprises a step 204 of detecting the set of N different preambles pre1 to preN. From the set of N different preambles pre1 to preN the second radio communications device is not able to deduce the identity of the first radio communications device T or that the first radio communications device T has sent a plurality of preambles pre1 to preN simultaneously. The step 200 further comprises a step 206, in which the second radio communications device BS receives from the first radio communications device T the payload P and the identifier ID, wherein the identifier ID is related to the first radio communications device T itself or a service running on the first radio communications device T. The payload P and the identifier ID are received via the at least one secondary radio resource rr2.

In a step 208 the high priority access attempt 102 from first radio communications device T is detected, if the received payload P and the identifier ID were sent via the at least one secondary radio resource rr2 being associated with the set of N different preambles pre1 to preN sent via the primary radio resource rr1.

The wording primary/secondary regarding the radio resources is intended only for discriminating the respective radio resources rr1, rr2 and does not necessarily imply any prioritization or a further technical difference between the mentioned radio resources rr1, rr2.

As not shown also a plurality of primary radio resources rr1 can be used for the simultaneous transmission of the set of preambles. However, if a plurality of primary radio resources rr1 is used, the simultaneous transmission of preambles via the primary radio resources rr1 at least comprises that the preambles pre1 to preN overlap during transmission.

According to an embodiment a request for additional transmission bandwidth can be initiated by the simultaneous transmission of the set of preambles pre1 to preN from the first radio communications device T to the second radio communications device BS. This request can be either used for the transfer of bigger transport blocks (e.g. 1000 bits instead of 500) or to adapt the modulation and coding scheme according to the estimated channel quality. As an example, a device with bad channel quality can send two preambles to double the size of its assigned data packet allocation, and in return in can change the modulation scheme from 16-QAM to QPSK, or alternatively the code rate.

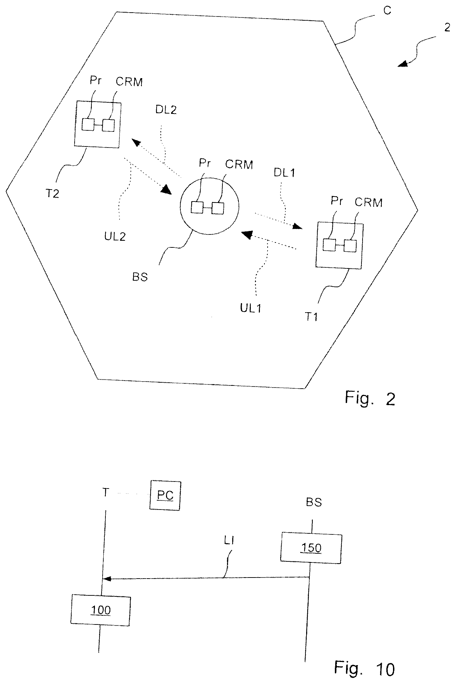

Figure 2 shows schematically a cell C of an exemplary radio communications network 2, especially a cellular radio communications network. First radio communications devices T1, T2 may connect to the second radio communications device BS. It is provided a respective downlink channel DL1, DL2 and a respective uplink channel UL1, UL2. Of course the second radio communications device BS may comprise respective remote radio heads, each remote radio head providing a respective cell C. Of course figure 2 is for illustrative purpose only and one second radio communications device BS may be capable of providing a plurality of cells C by means of respective remote radio heads. The functionality of the second radio access device BS can be split up into a plurality of devices. The term second radio communications device BS includes especially an eNodeB.

The second radio communications device BS, the first radio communications device T1 and the first radio communications device T2 each comprise the processor Pr and a computer readable medium CRM. On the computer readable medium CRM a computer program product is stored, wherein the computer program product comprises instructions, that, when executed by the processor Pr, perform the operations according to the methods described herein.

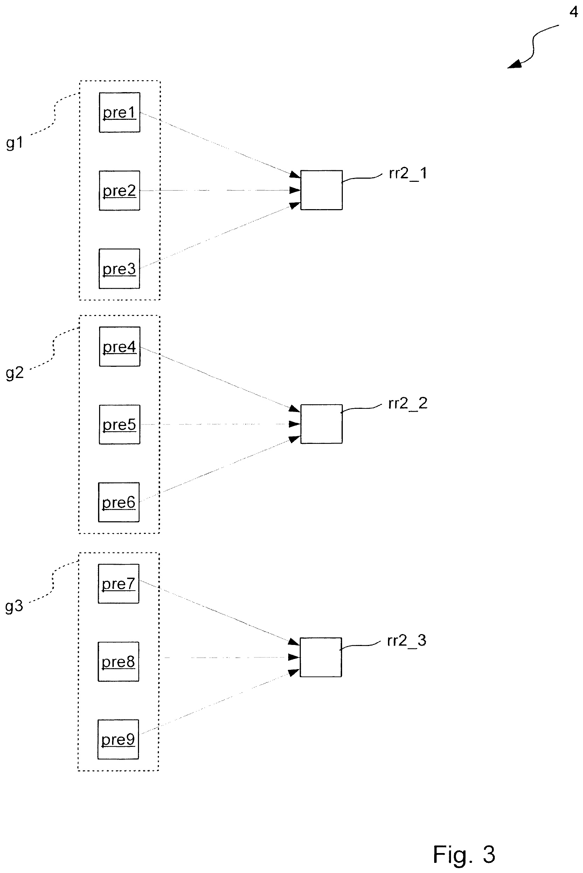

Figure 3 shows a schematic fixed association scheme 4 according to which a plurality of first preambles pre1 to pre3 corresponding to a first group g1 are associated with a first secondary radio resource rr2_1. Accordingly a second group g2 comprises a plurality of second preambles pre4 to pre6, which are associated with a second secondary radio resource rr2_2. Accordingly a third group g3 comprises a plurality of third preambles pre7 to pre9, which are associated with a third secondary radio resource rr2_3.

According to an embodiment the fixed association scheme 4 may be prescribed fix in the radio communications network 2 in accordance with standardization scheme.

According to a further embodiment a standardization scheme may comprise a plurality of fixed association schemes 4. The second radio communications device BS broadcasts the selection of one of the plurality of fixed association schemes 4.

According to a further embodiment the second radio communications device BS may determine the fixed association scheme 4 on its own and signal the fixed association scheme 4 prior to step 104 to the first radio communications device T.

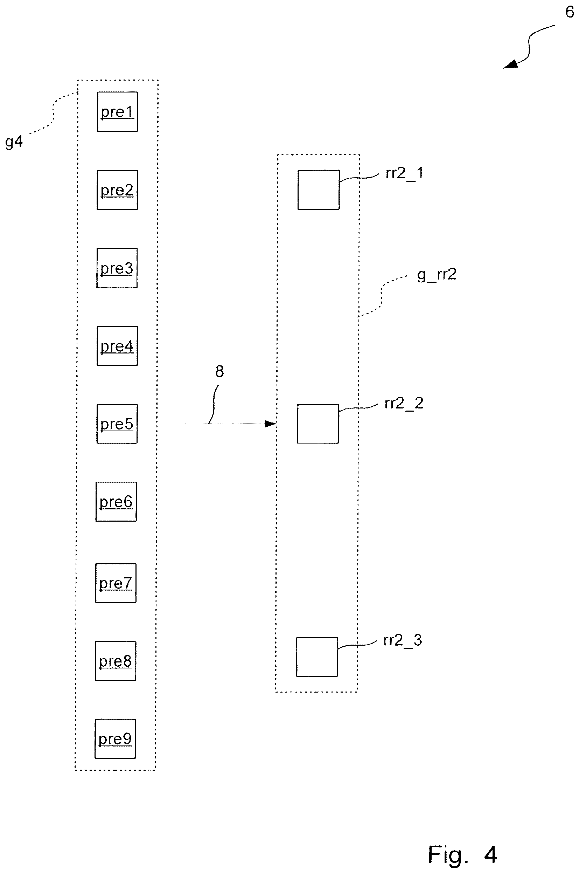

Figure 4 shows a schematic variable association scheme 6. According to the variable association scheme 6 the second radio communications device BS dynamically creates at least one association 8 between a received and detected preamble pre1 to pre9 of a preamble group g4 and at least one of the secondary radio resources rr2_1 to rr2_3 of a radio resource group g_rr2. This dynamic creation of the association 8 by the second radio communications device BS can be also described as a scheduling step.

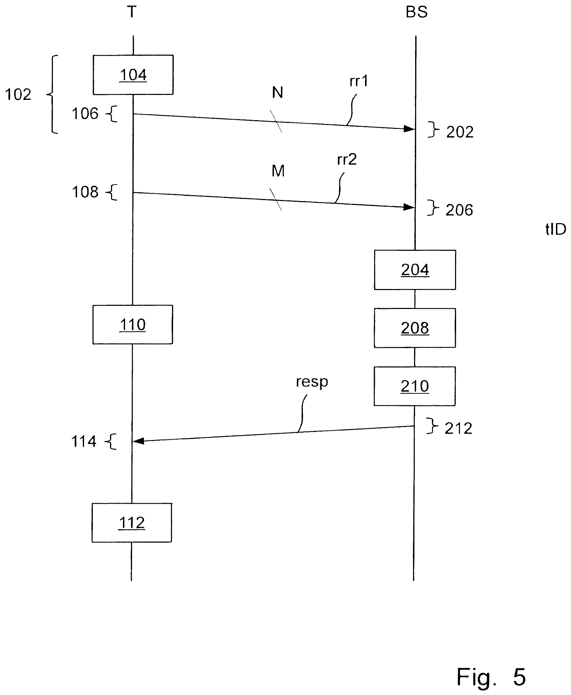

Figure 5 shows a schematic flow diagram showing the one-stage communication scheme. According to the step 102 preambles pre1 to preN are transmitted simultaneously according to the high priority access attempt to the second radio communications device BS by the first radio communications device T. According to the one-stage scheme the high priority access attempt the step 108 is executed by subsequently transmitting the payload P via a third number M of secondary radio resources rr2,wherein the third number M equals the first number N and therefore the same number of preambles and secondary radio resources rr2 are used by the first radio communications device T to transmit preambles pre1 to preN and payload P to the second radio communications device BS. The secondary radio resources rr2 are associated with the preambles sent by means of the fixed association scheme 4.

After the transmission of the payload P via the at least one secondary radio resource rr2 the first radio communications device T monitors in step 110 whether a response resp with regard to the payload P transmitted to the second radio communications device BS is received by the first radio communications device T.

As a) the payload P comprises the identifier ID of the first radio communications device T or of a service and b) a plurality of preambles pre1 to preN is associated with respective secondary radio resources rr2 being used to receive the payload P, the second radio communications device BS is from the point in time tID on of knowledge that a high priority access request was received by the second radio communications device BS from the first radio communications device T. After receiving the payload P in step 206 the high priority access attempt can be detected, as one identifier ID received by the at least one secondary radio resource rr2 can be mapped to a plurality of received preambles pre1 to preN.

In the step 204 the set of N different preambles pre1 to preN is detected in an anonymous manner, which means that the secondary radio communications device BS does not know from which one of first communications devices T the respective preambles pre1 to preN are received.

In step 208 the high priority access attempt 102 from first radio communications device T is detected.

In a step 210, after the steps 204 and 208, the payload P received via the at least one secondary radio resource rr2 is decoded. If the decoding of the payload P is successful an acknowledgement ACK is transmitted from the second radio communications device BS to the first radio communications device T via the at least one response resp in a step 212. If the decoding of the payload P is not successful in step 210, then a negative acknowledgement NAK is transmitted from the second radio communications device BS to the first radio communications device T via the response resp 212. The first radio communications device T receives the response resp in a step 114.

In a step 112 the first radio communications device T determines to not retransmit the payload P transmitted in step 108, if the response resp comprises an acknowledgement ACK. In the step 112 the first radio communications device T determines to retransmit the payload P transmitted in step 108, if the response resp comprises the negative acknowledgement NAK.

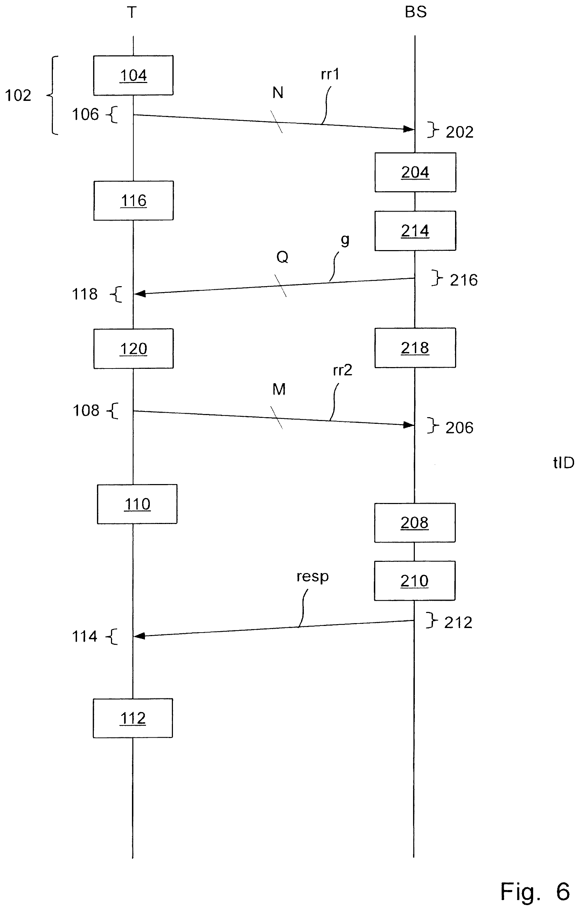

Figure 6 shows a schematic flow diagram showing the two-stage communication scheme. After receiving simultaneously the simultaneously submitted set of preambles pre1 to preN in step 202 the second radio communications device BS detects in the step 204 the set of N different preambles pre1 to preN or at least a subset of the different preambles pre1 to preN. After the step 204 the second radio communications device BS schedules in a step 214 a second number Q of access grants g, which are submitted via a broadcast channel to the first radio communications device T in the step 216. The access grants g indicate the secondary radio resources rr2 being granted to be used by the first radio communications device T. The first radio communications device T requests by means of the first number N of simultaneously sent preambles pre1 to preN a maximum number of N secondary radio resources rr2.

After the step 216 the second radio communications device BS monitors in a step 218 if the first radio communications device T sends the payload p via the third number M of secondary radio resources rr2.

In an embodiment the step 214 schedules the number of Q secondary radio resources rr2 to be granted according to the fixed association scheme 4. According to the fixed association scheme 4 the scheduling in step 214 results in a grant g which indicates a positive grant or a denial referring to the respective preamble pre1 to preN.

In an embodiment the step 214 schedules the number of Q secondary radio resources rr2 to be granted according to the variable association scheme 6. According to the variable association scheme 6, the second radio communications device BS can take into account the received and detected preambles and achieve a flexible distribution of the secondary radio resources rr2 by a respective access grant g.

After transmitting the first number N of preambles pre1 to preN the first radio communications device T is monitoring in a step 116, if the second radio communications device BS transmits the second number Q of access grants g. If the first radio communications device T does not receive an access grant g or a respective denial after a certain period of time a new access attempt is started. In the step 118 the first radio communications device T receives the second number Q of access grants g from the second radio communications device BS.

After receiving the second number Q of access grants g in response to the transmission of the set of preambles pre1 to preN from the second radio communications device BS the first radio communications device T determines in a step 120 how many of the granted secondary radio resources rr2 are to be used for upcoming transmission in step 108. Therefore, the first radio communications device T determines the third number M of granted secondary radio resources rr2 for the transmission of the payload P to the second radio communications device BS. In the step 108 the payload P is transmitted by the first radio communications device T to the second radio communications device BS via the third number M of granted secondary radio resources rr2.

The step 120 may comprise a determination of the third number M in dependence on a size of the payload P to be transmitted and/or an uplink channel quality measure like the signal to noise ratio, SINR, of an uplink channel and/or an available transmission power of the first radio communications device T. Therefore the third number M is being determined to be equal to or less than the second number Q. The third number M being less than the second number Q may reduce energy consumption at the first radio communications device T for the whole communication scheme.

According to an embodiment of step 120 the third number M of granted secondary radio resources rr2 is determined to be equal to the second number Q of received access grants g. Advantageously all granted secondary radio resources rr2 are used by the first radio communications device T to transmit the payload P and therefore decrease the probability of packet/data loss at the second radio communications device BS in or after the step 206.

After receiving the third number M of granted secondary radio resources rr2 in the step 206 the second radio communications device BS detects in step 208 the high priority access attempt 102 in dependence on the received identification ID. In the step 210 the received data via the at least one secondary radio resource rr2 is being decoded. In the step 212 the response resp includes an acknowledgement ACK or a negative acknowledgement NAK in response to the received payload P and the response resp is transmitted to the first radio communications device T.

The response resp is received by the first radio communications device T in step 114. In dependence on the response resp the first radio communications device T determines in the step 112 if a retransmission of the data will be executed.

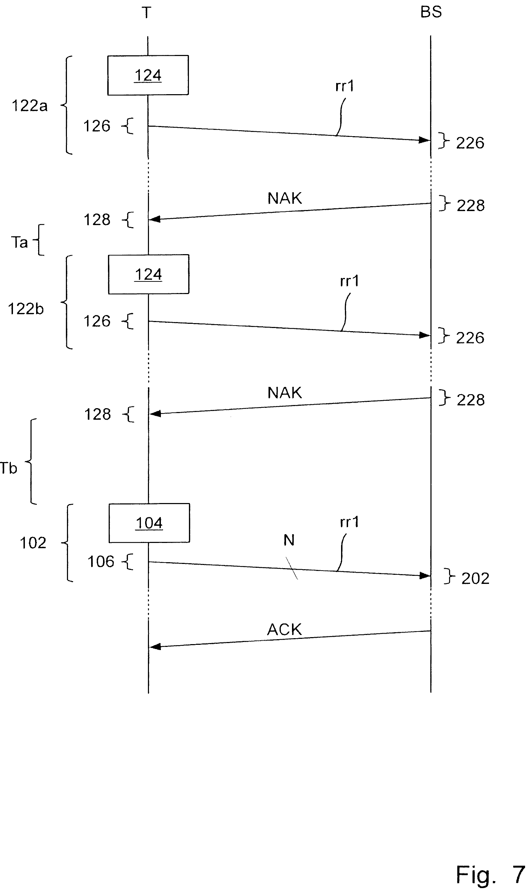

Figure 7 shows a schematic flow diagram. The first radio communications device T performs a first low priority access attempt in a step 122a. The step 122a comprises a step 124, in which the first radio communications device T determines a single preamble which is transmitted in a step 126 to the second radio communications device BS via the single primary radio resource rr1.

The second radio communications device BS receives in a step 226 the single preamble from the first radio communications device T. Independently whether the one-stage or two-stage communication scheme is applied in step 228 the second radio communications device BS transmits a negative acknowledgement NAK to the first radio communications device T in response to a submission of data via the at least one secondary radio resources rr2.

The first radio communications device T receives the negative acknowledgement NAK in a step 128 and waits a period of time Ta until a second low priority access attempt in step 122b is initiated. After receiving a further negative acknowledgement NAK, the first radio communications device T waits a period of time Tb until the last access attempt in the form of the high priority access attempt is performed in the step 102. The high priority access attempt in the step 102 increases the probability to successfully transmit payload from the first radio communications device T to the second radio communications device BS. Consequently, the probability that the first radio communications device T receives the positive acknowledgement ACK from the second radio communications device BS is increased. Consequently, the last one of the access attempts is a high priority access attempt.

In a further embodiment the first number N of preambles pre1 to preN is increased in each further high priority access attempt when a plurality of high priority access attempts are performed and a respective negative acknowledgement NAK is received after a high priority access attempt by the first radio access device T. This embodiment advantageously minimises energy consumption while decreasing the probability of packet loss.

In a further embodiment the first number N of preambles pre1 to preN is decreased in each high priority access attempt when a plurality of high priority access attempts are performed and a respective negative acknowledgement NAK is received after a high priority access attempt by the first radio access device T.

In the case of the two-stage protocol the ACK/NAK messages may not only refer to the successful/unsuccessful reception of data via the at least one secondary radio resource rr2 but may also refer to a grant/denial of a respective secondary radio resource rr2 being scheduled by the second radio communications device BS.

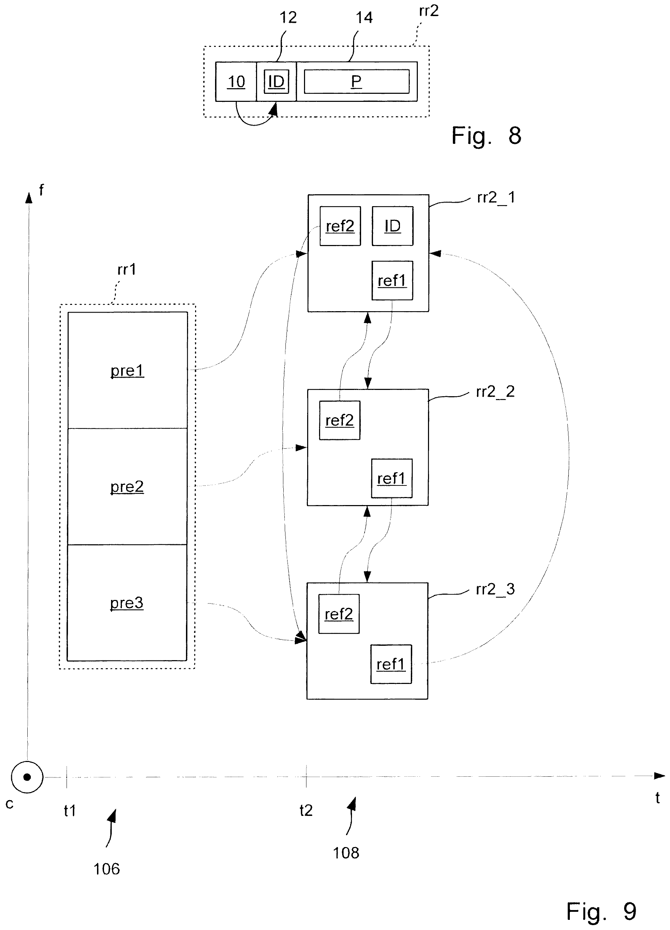

Figure 8 shows a schematic structure of a data packet which is used to be transmitted via the secondary radio resource rr2. A descriptor 10 is used to describe a control section 12. The control section 12 may comprise the identifier ID and further information regarding the data packets. In the payload section 14 the payload P is transmitted.

Figure 9 shows a schematic radio resource diagram and therefore an exemplified communication behaviour of the first radio communications device T. The domains time t, frequency f and code c are shown. At the first point in time t1 the simultaneous transmission of preambles pre1 to pre3 via the primary radio resources rr1 is started according to the step 106. In this example each one of the preambles pre1 to pre3 is associated with a respective one of the secondary radio resources rr2_1 to rr2_3. At the second point in time t2 a transmission via the secondary radio resources rr2_1 to rr2_2 is initiated according to the step 108. In a not shown manner payload P is transmitted via the plurality of secondary radio resources rr2_1 to rr2_3.

The identifier ID identifying the first radio communications device T or a service on the first radio communications device T is transmitted via the first secondary radio resource rr2_1.

A reference ref1 refers to a location in time t and/or frequency f and/or code of the second secondary radio resource rr2_2 and is being transmitted via the first secondary radio resource rr2_1. Therefore, the reference ref1 is transmitted via a first one of the secondary radio resources and refers to a second one of the secondary radio resources. The references ref1 transmitted via the respective secondary radio resource establishes circularly linked secondary radio resources rr2.

Second references ref2 are transmitted via the secondary radio resources rr2 and established together with the first references ref2 circular doubly linked secondary radio resources rr2.

According to a further embodiment the secondary radio resources rr2 may comprise more than the two references ref1, ref2, especially three, four, five or more to establish a closer mesh of the secondary radio resources rr2.

The references ref1 and ref2 may be realized as a frequency offset and/or a time offset and/or a code offset to the present secondary radio resource rr2. Especially an offset in number of physical resource blocks or data packet allocations can be encoded implicitly or explicitly.

In the case the offset is zero, the first radio communications device T may transmit two or more data packets and/or payload via a single secondary radio resources rr2. This scheme may be referred to as single-user MIMO.

In this example, only a single one of the secondary radio resources rr2 is used to transmit the identifier ID of the first radio communications device T and/or of service running on the first radio communications device T. Especially in the case when only small fractions of payload are transmitted via a plurality of secondary radio resources rr2, the further secondary radio resources rr2 being linked by at least one reference ref1, ref2 do not have to transmit the identifier ID. Therefore, a gain in payload transport capacity can be achieved.

According to a further embodiment a plurality of the secondary radio resources rr2, especially all secondary radio resources rr2, may comprise the identifier ID.

According to the embodiment shown in figure 9 the references ref1 and ref2 refer only to a frequency location. According to a further embodiment, the secondary radio resources rr2_1 to rr2_2 can be spaced apart not only in frequency but also in time t and/or in code to achieve a better link budget.

Figure 10 shows a schematic flow diagram. The first radio communications device T or a respective service is associated with a priority class PC. The respective priority class PC indicates a permanent high priority mode for the first radio communications device T or the respective service. By configuration, the communications network 2 may offer a plurality of priority classes PC. In a step 150 the second radio communications device BS determines a load indicator LI. The load indicator LI is determined for example in dependence on a detection rate of preambles or other data, a processor load, a ratio of ACKs/NAKs, schedule decisions, used radio resources, number of registered first radio communications devices T in cell C or the like.

In an embodiment the load indicator LI is a threshold and in the step 100 it is determined whether the priority class PC is above/below that threshold. In dependence on this determination the first radio communications device T determines whether the high priority access mode is enabled or disabled. Therefore, the high priority access mode is enabled in dependence on the load indicator LI and in dependence on the priority class PC.

In an embodiment the load indicator LI is received by the first radio communications device T as a threshold. The first radio communications device T determines a random value and compares the random value to the received threshold. If the random value is above the threshold according to the load indicator LI, first radio communications device T operates in the high priority access mode. If the random value is below the threshold according to the load indicator LI, first radio communications device T operates in the low priority access mode.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A first radio communications device being a terminal (T) for a radio communications network (2) being configured to:
- determine (100) a high priority access mode to perform a prioritized transmission of payload (P) to a second radio communications device being a base station (BS);
- perform (102) a high priority access attempt to the second radio communications device (BS) while the first radio communications device (T) is operating in the high priority access mode, wherein performing (102) the high priority access attempt comprises:
- determining (104) a set of different preambles (prel, preN) associated with one or more secondary radio resources (rr2), and
- transmitting (106) to the second radio communications device (BS) the set of different preambles (prel, preN) simultaneously via one or more primary uplink radio resources (rr1); and
- transmit (108) the payload (P) to the second radio communications device (BS) via one or more secondary uplink resources (rr2).

2. The first radio communications device (T) according to claim 1, the first radio communications device (T) being configured to:
- transmit (108) the payload (P) and an identifier (ID) of the first radio communications device (T) and/or of a service of the first radio communications device (T) to the second radio communications device (BS) via the one or more secondary radio resources.

3. The first radio communications device (T) according to claim 1 or 2, wherein the set of preambles (prel, preN) comprises a first number (N) of preambles (prel, preN), and wherein the first radio communications device (T) is being configured to:
- receive a second number (Q) of access grants (g) in response to the transmission of the set of preambles (prel, preN) from the second radio communications device (BS), wherein the second number (Q) is equal to or less than the first number (N);
- determine a third number (M) of granted secondary radio resources (rr2) for the transmission of the payload (P) to the second radio communications device (BS); and
- transmit (108) the payload (P) to the second radio communications device (BS) via the third number (M) of granted secondary radio resources (rr2).

4. The first radio communications device (T) according to claim 3, wherein the third number (M) equals the second number (Q).

5. The first radio communications device (T) according to one of the preceding claims, the first radio communications device (T) being configured to:
- determine (104) the set of preambles (prel, preN) to be associated with a set of disjoint secondary radio resources (rr2).

6. The first radio communications device (T) according to one of the claims 1 to 4, the first radio communications device (T) being configured to:
- determine (104) the set of preambles (prel, preN) to be associated with a single secondary radio resource (rr2) .

7. The first radio communications device (T) according to one of the preceding claims, the first radio communications device (T) being configured to
- comprise a priority class (PC) indicating a permanent high priority mode for the first radio communications device (T) and/or for a service running on the first radio communications device (T);
- receive a load indicator (LI) from the secondary radio communications device (BS); and
- disable (100) the high priority access mode in dependence on the load indicator (LI) and in dependence on the priority class (PC).

8. The first radio communications device (T) according to one of the preceding claims, the first radio communications device (T) being configured to
- perform (122) a plurality of access attempts being spaced by a respective period in time (Ta, Tb), wherein at least one of the plurality of access attempts is the high priority access attempt.

9. The first radio communications device (T) according to one of the preceding claims, the first radio communications device (T) being configured to:
- transmit payload data (P) via a plurality of secondary radio resources (rr2), wherein at least one reference (refl; ref2) referring to a first one of the plurality of secondary radio resources (rr2) is transmitted via a second one of the plurality of secondary radio resources (rr2).

10. A method to operate a first radio communications device being a terminal (T) for a radio communications network (2), the method comprising:
- determining (100) a high priority access mode to perform a prioritized transmission of payload (P) to a second radio communications device being a base station (BS);
- performing (102) a high priority access attempt to the second radio communications device (BS) while the first radio communications device (T) is operating in the high priority access mode, wherein performing (102) the high priority access attempt comprises:
- determining (104) a set of different preambles (prel, preN) associated with one or more secondary radio resources (rr2), and
- transmitting (106) to the second radio communications device (BS) the set of different preambles (prel, preN) simultaneously via one or more primary uplink radio resources (rr1); and
- transmitting (108) the payload (P) to the second radio communications device (BS) via one or more secondary uplink resources (rr2).

11. A second radio communications device being a base station (BS) for a radio communications network (2), the second radio communications device (BS) being configured to:
- determine (200) a high priority access attempt from a first radio communications device being a terminal (T), wherein the determining (200) of the high priority access attempt comprises:
- receiving (202) a set of different preambles (prel, preN) simultaneously from the first radio communications device (T) via one or more primary uplink radio resources (rr1), and
- detecting (204) the set of different preambles (prel, preN);
- receiving (206) payload (P) and an identifier (ID) of the first radio communications device (T) and/or of a service of the first radio communications device (T) from the first radio communications device (T) via one or more secondary uplink radio resources (rr2);
- detecting (208) a high priority access attempt if the received payload (P) and the identifier (ID) are received via the one or more secondary radio resources (rr2), wherein the set of different preambles (prel, preN) is associated with the one or more secondary radio resources (rr2).

12. The second radio communications device (BS) according to claim 11, being configured to communicate with the first radio communications device (T) according to one of the claims 1 to 9.

13. A method to operate a second radio communications device being a base station (BS) for a radio communications network (2), the method comprising:
- determining (200) a high priority access attempt from a first radio communications device being a terminal (T), wherein the determining (200) of the high priority access attempt comprises:
- receiving (202) a set of different preambles (prel, preN) simultaneously from the first radio communications device (T) via one or more primary uplink radio resources (rr1), and
- detecting (204) the set of different preambles (prel, preN);
- receiving (206) payload (P) and an identifier (ID) of the first radio communications device (T) and/or of a service of the first radio communications device (T) from the first radio communications device (T) via one or more secondary uplink resources (rr2);
- detecting (208) a high priority access attempt if the received payload (P) and the identifier (ID) are received via the one or more secondary radio resources (rr2), wherein the set of different preambles (prel, preN) is associated with the one or more secondary radio resources (rr2).

14. A method to operate a radio access network (2) comprising:
the method according to claim 10; and
the method according to claim 13.

15. A computer program product embodied on a non-transitory computer readable medium (CRM) for performing operations, wherein the computer program product comprises instructions, that when executed by a processor (Pr), perform the operations of a method according to at least one of the claims 10, 13 and 14.

## Patentansprüche

1. Erste Funkkommunikationsvorrichtung, die ein Endgerät (T) für ein Funkkommunikationsnetzwerk (2) ist, das dazu eingerichtet ist:
- einen Zugriffsmodus mit hoher Priorität zu bestimmen (100), um eine priorisierte Übertragung der Nutzlast (P) zu einer zweiten Funkkommunikationsvorrichtung durchzuführen, die eine Basisstation (BS) ist;
- einen Zugriffsversuch mit hoher Priorität auf die zweite Funkkommunikationsvorrichtung (BS) durchzuführen (102), während die erste Funkkommunikationsvorrichtung (T) im Zugriffsmodus mit hoher Priorität arbeitet, wobei das Durchführen (102) des Zugriffsversuchs mit hoher Priorität umfasst:
- Bestimmen (104) eines Satzes von verschiedenen Präambeln (prel, preN), die einer oder mehreren sekundären Funkressourcen (rr2) zugeordnet sind, und
- Übertragen (106) des Satzes verschiedener Präambeln (prel, preN) gleichzeitig an die zweite Funkkommunikationsvorrichtung (BS) über eine oder mehrere primäre Aufwärtsstrecken-Funkressourcen (rr1);
und
- Übertragen (108) der Nutzlast (P) an die zweite Funkkommunikationsvorrichtung (BS) über eine oder mehrere sekundäre Aufwärtsstreckenressourcen (rr2).

2. Erste Funkkommunikationsvorrichtung (T) nach Anspruch 1, wobei die erste Funkkommunikationsvorrichtung (T) dazu eingerichtet ist:
- die Nutzlast (P) und einen Identifikator (ID) der ersten Funkkommunikationsvorrichtung (T) und/oder eines Dienstes der ersten Funkkommunikationsvorrichtung (T) an die zweite Funkkommunikationsvorrichtung (BS) über die eine oder die mehreren Sekundärfunkressourcen zu übertragen (108).

3. Erste Funkkommunikationsvorrichtung (T) nach Anspruch 1 oder 2, wobei der Satz von Präambeln (prel, preN) eine erste Anzahl (N) von Präambeln (prel, preN) umfasst und wobei die erste Funkkommunikationsvorrichtung (T) dazu eingerichtet ist:
- eine zweite Anzahl (Q) von Zugriffsgewährungen (g) als Reaktion auf die Übertragung des Satzes von Präambeln (prel, preN) von der zweiten Funkkommunikationsvorrichtung (BS) zu empfangen, wobei die zweite Anzahl (Q) gleich oder kleiner als die erste Anzahl (N) ist;
- eine dritte Anzahl (M) von gewährten Sekundärfunkressourcen (rr2) für die Übertragung der Nutzlast (P) an die zweite Funkkommunikationsvorrichtung (BS) zu bestimmen; und
- die Nutzlast (P) an die zweite Funkkommunikationsvorrichtung (BS) über die dritte Anzahl (M) der gewährten Sekundärfunkressourcen (rr2) zu übertragen (108).

4. Erste Funkkommunikationsvorrichtung (T) nach Anspruch 3, wobei die dritte Anzahl (M) gleich der zweiten Anzahl (Q) ist.

5. Erste Funkkommunikationsvorrichtung (T) nach einem der vorhergehenden Ansprüche, wobei die erste Funkkommunikationsvorrichtung (T) dazu eingerichtet ist:
- den Satz von Präambeln (prel, preN) zu bestimmen (104), der einem Satz von unzusammenhängenden sekundären Funkressourcen (rr2) zuzuordnen ist.

6. Erste Funkkommunikationsvorrichtung (T) nach einem der Ansprüche 1 bis 4, wobei die erste Funkkommunikationsvorrichtung (T) dazu eingerichtet ist:
- den Satz von Präambeln (prel, preN) zu bestimmen (104), der einer einzelnen sekundären Funkressource (rr2) zuzuordnen ist.

7. Erste Funkkommunikationsvorrichtung (T) nach einem der vorhergehenden Ansprüche, wobei die erste Funkkommunikationsvorrichtung (T) dazu eingerichtet ist:
- eine Prioritätsklasse (PC) zu umfassen, die einen permanenten Modus mit hoher Priorität für die erste Funkkommunikationsvorrichtung (T) und/oder für einen Dienst anzeigt, der auf der ersten Funkkommunikationsvorrichtung (T) läuft;
- einen Lastindikator (LI) von der sekundären Funkkommunikationsvorrichtung (BS) zu empfangen; und
- den Zugriffsmodus mit hoher Priorität in Abhängigkeit vom Lastindikator (LI) und in Abhängigkeit von der Prioritätsklasse (PC) zu deaktivieren (100).

8. Erste Funkkommunikationsvorrichtung (T) nach einem der vorhergehenden Ansprüche, wobei die erste Funkkommunikationsvorrichtung (T) dazu eingerichtet ist:
- eine Vielzahl von Zugriffsversuchen durchzuführen (122), die durch eine entsprechende Zeitspanne (Ta, Tb) beabstandet sind, wobei mindestens einer der Vielzahl von Zugriffsversuchen der Zugriffsversuch mit hoher Priorität ist.

9. Erste Funkkommunikationsvorrichtung (T) nach einem der vorhergehenden Ansprüche, wobei die erste Funkkommunikationsvorrichtung (T) dazu eingerichtet ist:
- Nutzlastdaten (P) über eine Vielzahl von sekundären Funkressourcen (rr2) zu übertragen, wobei mindestens eine Referenz (refl; ref2), die sich auf eine erste der Vielzahl von sekundären Funkressourcen (rr2) bezieht, über eine zweite der Vielzahl von sekundären Funkressourcen (rr2) übertragen wird.

10. Verfahren zum Betreiben einer ersten Funkkommunikationsvorrichtung, die ein Endgerät (T) für ein Funkkommunikationsnetz (2) ist, wobei das Verfahren umfasst:
- Bestimmen (100) eines Zugriffsmodus mit hoher Priorität, um eine priorisierte Übertragung der Nutzlast (P) zu einer zweiten Funkkommunikationsvorrichtung durchzuführen, die eine Basisstation (BS) ist;
- Durchführen (102) eines Zugriffsversuchs mit hoher Priorität auf die zweite Funkkommunikationsvorrichtung (BS), während die erste Funkkommunikationsvorrichtung (T) im Zugriffsmodus mit hoher Priorität arbeitet, wobei das Durchführen (102) des Zugriffsversuchs mit hoher Priorität umfasst:
- Bestimmen (104) eines Satzes von verschiedenen Präambeln (prel, preN), die einer oder mehreren sekundären Funkressourcen (rr2) zugeordnet sind, und
- Übertragen (106) des Satzes verschiedener Präambeln (prel, preN) gleichzeitig an die zweite Funkkommunikationsvorrichtung (BS) über eine oder mehrere primäre Aufwärtsstrecken-Funkressourcen (rr1);
und
- Übertragen (108) der Nutzlast (P) an die zweite Funkkommunikationsvorrichtung (BS) über eine oder mehrere sekundäre Aufwärtsstreckenressourcen (rr2).

11. Zweite Funkkommunikationsvorrichtung, die eine Basisstation (BS) für ein Funkkommunikationsnetz (2) ist, wobei die zweite Funkkommunikationsvorrichtung (BS) dazu eingerichtet ist:
- einen Zugriffsversuch mit hoher Priorität von einer ersten Funkkommunikationsvorrichtung zu bestimmen (200), die ein Endgerät (T) ist,
wobei das Bestimmen (200) des Zugriffsversuchs mit hoher Priorität umfasst:
- Empfangen (202) eines Satzes von verschiedenen Präambeln (prel, preN) gleichzeitig von der ersten Funkkommunikationsvorrichtung (T) über eine oder mehrere primäre Aufwärtsstrecken-Funkressourcen (rr1), und
- Erfassen (204) des Satzes verschiedener Präambeln (prel, preN);
- Empfangen (206) der Nutzlast (P) und eines Identifikators (ID) der ersten Funkkommunikationsvorrichtung (T) und/oder eines Dienstes der ersten Funkkommunikationsvorrichtung (T) von der ersten Funkkommunikationsvorrichtung (T) über eine oder mehrere sekundäre Aufwärtsstrecken-Funkressourcen (rr2);
- Erfassen (208) eines Zugriffsversuchs mit hoher Priorität, wenn die empfangene Nutzlast (P) und der Identifikator (ID) über die eine oder mehrere sekundäre Funkressourcen (rr2) empfangen werden, wobei der Satz von verschiedenen Präambeln (prel, preN) einer oder mehreren sekundären Funkressourcen (rr2) zugeordnet ist.

12. Zweite Funkkommunikationsvorrichtung (BS) nach Anspruch 11, die dazu eingerichtet ist, mit der ersten Funkkommunikationsvorrichtung (T) nach einem der Ansprüche 1 bis 9 zu kommunizieren.

13. Verfahren zum Betreiben einer zweiten Funkkommunikationsvorrichtung, die eine Basisstation (BS) für ein Funkkommunikationsnetz (2) ist, wobei das Verfahren umfasst:
- Bestimmen (200) eines Zugriffsversuchs mit hoher Priorität von einer ersten Funkkommunikationsvorrichtung, die ein Endgerät (T) ist,
wobei das Bestimmen (200) des Zugriffsversuchs mit hoher Priorität umfasst:
- Empfangen (202) eines Satzes von verschiedenen Präambeln (prel, preN) gleichzeitig von der ersten Funkkommunikationsvorrichtung (T) über eine oder mehrere primäre Aufwärtsstrecken-Funkressourcen (rr1), und
- Erfassen (204) des Satzes verschiedener Präambeln (prel, preN);
- Empfangen (206) der Nutzlast (P) und eines Identifikators (ID) der ersten Funkkommunikationsvorrichtung (T) und/oder eines Dienstes der ersten Funkkommunikationsvorrichtung (T) von der ersten Funkkommunikationsvorrichtung (T) über eine oder mehrere sekundäre Aufwärtsstrecken-Ressourcen (rr2);
- Erfassen (208) eines Zugriffsversuchs mit hoher Priorität, wenn die empfangene Nutzlast (P) und der Identifikator (ID) über die eine oder mehrere sekundäre Funkressourcen (rr2) empfangen werden, wobei der Satz von verschiedenen Präambeln (prel, preN) einer oder mehreren sekundären Funkressourcen (rr2) zugeordnet ist.

14. Verfahren zum Betreiben eines Funkzugriffsnetzes (2), umfassend:
das Verfahren nach Anspruch 10; und
das Verfahren nach Anspruch 13.

15. Computerprogrammprodukt, das auf einem nichtflüchtigen, computerlesbaren Medium (CRM) zum Ausführen von Operationen verkörpert ist, wobei das Computerprogrammprodukt Anweisungen umfasst, die beim Ausführen durch einen Prozessor (Pr) die Vorgänge eines Verfahrens nach mindestens einem der Ansprüche 10, 13 und 14 ausführen.

## Revendications

1. Premier dispositif de radiocommunication qui est un terminal (T) pour un réseau de radiocommunication (2) qui est configuré :
- pour déterminer (100) un mode d'accès à haute priorité pour effectuer une transmission priorisée de charge utile (P) à un second dispositif de radiocommunication qui est une station de base (BS) ;
- pour effectuer (102) une tentative d'accès à haute priorité au second dispositif de radiocommunication (BS) pendant que le premier dispositif de radiocommunication (T) fonctionne dans le mode d'accès à haute priorité, dans lequel la réalisation (102) de la tentative d'accès à haute priorité comprend :
- la détermination (104) d'un ensemble de différents préambules (pre1, preN) associés à une ou plusieurs ressources radio secondaires (rr2), et
- la transmission (106) au second dispositif de radiocommunication (BS) de l'ensemble de différents préambules (pre1, preN) en même temps par le biais d'une ou de plusieurs ressources radio de liaison montante primaires (rr1) ; et
- pour transmettre (108) la charge utile (P) au second dispositif de radiocommunication (BS) par le biais d'une ou de plusieurs ressources de liaison montante secondaires (rr2).

2. Premier dispositif de radiocommunication (T) selon la revendication 1, le premier dispositif de radiocommunication (T) étant configuré :
- pour transmettre (108) la charge utile (P) et un identifiant (ID) du premier dispositif de radiocommunication (T) et/ou d'un service du premier dispositif de radiocommunication (T) au second dispositif de radiocommunication (BS) par le biais de la ou des ressources radio secondaires.

3. Premier dispositif de radiocommunication (T) selon la revendication 1 ou 2, dans lequel l'ensemble de préambules (pre1, preN) comprend un premier nombre (N) de préambules (pre1, preN) et le premier dispositif de radiocommunication (T) étant configuré :
- pour recevoir un deuxième nombre (Q) d'accords d'accès (g) en réponse à la transmission de l'ensemble de préambules (pre1, preN) à partir du second dispositif de radiocommunication (BS), dans lequel le deuxième nombre (Q) est égal ou inférieur au premier nombre (N) ;
- pour déterminer un troisième nombre (M) de ressources radio secondaires accordées (rr2) pour la transmission de la charge utile (P) au second dispositif de radiocommunication (BS) ; et
- pour transmettre (108) la charge utile (P) au second dispositif de radiocommunication (BS) par le biais du troisième nombre (M) de ressources radio secondaires accordées (rr2).

4. Premier dispositif de radiocommunication (T) selon la revendication 3, dans lequel le troisième nombre (M) est égal au deuxième nombre (Q).

5. Premier dispositif de radiocommunication (T) selon l'une des revendications précédentes, le premier dispositif de radiocommunication (T) étant configuré :
- pour déterminer (104) l'ensemble de préambules (pre1, preN) à associer à un ensemble de ressources radio secondaires disjointes (rr2).

6. Premier dispositif de radiocommunication (T) selon l'une des revendications 1 à 4, le premier dispositif de radiocommunication (T) étant configuré :
- pour déterminer (104) l'ensemble de préambules (pre1, preN) à associer à une seule ressource radio secondaire (rr2).

7. Premier dispositif de radiocommunication (T) selon l'une des revendications précédentes, le premier dispositif de radiocommunication (T) étant configuré :
- pour comprendre une classe de priorité (PC) indiquant un mode de haute priorité permanent pour le premier dispositif de radiocommunication (T) et/ou pour un service s'exécutant sur le premier dispositif de radiocommunication (T) ;
- pour recevoir un indicateur de charge (LI) en provenance du dispositif de radiocommunication secondaire (BS) ; et
- pour désactiver (100) le mode d'accès à haute priorité en fonction de l'indicateur de charge (LI) et en fonction de la classe de priorité (PC).

8. Premier dispositif de radiocommunication (T) selon l'une des revendications précédentes, le premier dispositif de radiocommunication (T) étant configuré :
- pour effectuer (122) une pluralité de tentatives d'accès qui sont espacées par une période de temps respective (Ta, Tb), dans lequel au moins une tentative d'accès de la pluralité de tentatives d'accès est la tentative d'accès à haute priorité.

9. Premier dispositif de radiocommunication (T) selon l'une des revendications précédentes, le premier dispositif de radiocommunication (T) étant configuré :
- pour transmettre des données de charge utile (P) par le biais d'une pluralité de ressources radio secondaires (rr2), dans lequel au moins une référence (ref1 ; ref2) se référant à une première ressource radio secondaire de la pluralité de ressources radio secondaires (rr2) est transmise par le biais d'une deuxième ressource radio secondaire de la pluralité de ressources radio secondaires (rr2) .

10. Procédé pour faire fonctionner un premier dispositif de radiocommunication qui est un terminal (T) pour un réseau de radiocommunication (2), le procédé comprenant :
- la détermination (100) d'un mode d'accès à haute priorité pour effectuer une transmission priorisée de charge utile (P) à un second dispositif de radiocommunication qui est une station de base (BS) ;
- la réalisation (102) d'une tentative d'accès à haute priorité au second dispositif de radiocommunication (BS) pendant que le premier dispositif de radiocommunication (T) fonctionne dans le mode d'accès à haute priorité, dans lequel la réalisation (102) de la tentative d'accès à haute priorité comprend :
- la détermination (104) d'un ensemble de différents préambules (pre1, preN) associés à une ou plusieurs ressources radio secondaires (rr2), et
- la transmission (106) au second dispositif de radiocommunication (BS) de l'ensemble de différents préambules (pre1, preN) en même temps par le biais d'une ou de plusieurs ressources radio de liaison montante primaires (rr1) ; et
- la transmission (108) de la charge utile (P) au second dispositif de radiocommunication (BS) par le biais d'une ou de plusieurs ressources de liaison montante secondaires (rr2).

11. Second dispositif de radiocommunication qui est une station de base (BS) pour un réseau de radiocommunication (2), le second dispositif de radiocommunication (BS) étant configuré :
- pour déterminer (200) une tentative d'accès à haute priorité d'un premier dispositif de radiocommunication qui est un terminal (T),
dans lequel la détermination (200) de la tentative d'accès à haute priorité comprend :
- la reception (202) d'un ensemble de différents préambules (pre1, preN) en même temps en provenance du premier dispositif de radiocommunication (T) par le biais d'une ou de plusieurs ressources radio de liaison montante primaires (rr1), et
- la détection (204) de l'ensemble de différents préambules (pre1, preN) ;
- la reception (206) d'une charge utile (P) et d'un identifiant (ID) du premier dispositif de radiocommunication (T) et/ou d'un service du premier dispositif de radiocommunication (T) en provenance du premier dispositif de radiocommunication (T) par le biais d'une ou de plusieurs ressources radio de liaison montante secondaires (rr2) ;
- la détection (208) d'une tentative d'accès à haute priorité si la charge utile (P) reçue et l'identifiant (ID) sont reçus par le biais de la ou des ressources radio secondaires (rr2), dans lequel l'ensemble de différents préambules (pre1, preN) est associé à la ou aux ressources radio secondaires (rr2).

12. Second dispositif de radiocommunication (BS) selon la revendication 11, qui est configuré pour communiquer avec le premier dispositif de radiocommunication (T) selon l'une des revendications 1 à 9.

13. Procédé pour faire fonctionner un second dispositif de radiocommunication qui est une station de base (BS) pour un réseau de radiocommunication (2), le procédé comprenant :
- la détermination (200) d'une tentative d'accès à haute priorité d'un premier dispositif de radiocommunication qui est un terminal (T),
dans lequel la détermination (200) de la tentative d'accès à haute priorité comprend :
- la reception (202) d'un ensemble de différents préambules (pre1, preN) en même temps en provenance du premier dispositif de radiocommunication (T) par le biais d'une ou de plusieurs ressources radio de liaison montante primaires (rr1), et
- la détection (204) de l'ensemble de différents préambules (pre1, preN) ;
- la reception (206) d'une charge utile (P) et d'un identifiant (ID) du premier dispositif de radiocommunication (T) et/ou d'un service du premier dispositif de radiocommunication (T) en provenance du premier dispositif de radiocommunication (T) par le biais d'une ou de plusieurs ressources de liaison montante secondaires (rr2) ;
- la détection (208) d'une tentative d'accès à haute priorité si la charge utile (P) reçue et l'identifiant (ID) sont reçus par le biais de la ou des ressources radio secondaires (rr2), dans lequel l'ensemble de différents préambules (pre1, preN) est associé à la ou aux ressources radio secondaires (rr2).

14. Procédé pour faire fonctionner un réseau d'accès radio (2) comprenant :
le procédé selon la revendication 10 ; et
le procédé selon la revendication 13.

15. Produit-programme d'ordinateur intégré sur un support non transitoire lisible par ordinateur (CRM) pour effectuer des opérations, le produit-programme d'ordinateur comprenant des instructions qui, lorsqu'elles sont exécutées par un processeur (Pr), effectuent les opérations d'un procédé selon au moins l'une des revendications 10, 13 et 14.
